# EUROPÄISCHE PATENTANMELDUNG

(11) **EP 3 705 688 A1**
(43) Veröffentlichungstag der Anmeldung: **09.09.2020**
(21) Anmeldenummer: 19161289.4
(22) Anmeldetag: 07.03.2019
(51) Int. Cl.: F01D 17/10, F01D 17/16, F02C 6/12, F02C 9/18, F02C 9/22, F02B 37/18, F02B 37/24

(54) **TURBINENANORDNUNG MIT VARIABLER GEOMETRIE**

(71) Anmelder: BorgWarner Inc., Auburn Hills, MI 48326 (US)
(72) Erfinder: Injac, Ivan, 67292 Kirchheimbolanden (DE); Kosch, Mathias, 55130 Mainz (DE); Coksen, Ahmet, 68199 Mannheim (DE); Dreher, Bernhard, 67659 Kaiserslautern (DE); Weber, Oliver, 67677 Enkenbach-Alsenborn (DE); Haibt, Christian, 64665 Alsbach-Hähnlein (DE)
(74) Vertreter: Baur & Weber Patentanwälte PartG mbB

(57) **Zusammenfassung**

Es wird eine Turbinenanordnung mit variabler Geometrie, insbesondere in einer Aufladevorrichtung einer Brennkraftmaschine angegeben, die innerhalb eines Turbinengehäuses (14) ein auf einer Welle (4) angeordnetes Turbinenrad (6) aufweist, das radial von einer Vielzahl über einen Stellantrieb (24) bezüglich ihres Winkels verstellbaren Schaufeln (8) zur Erzeugung der variablen Geometrie umgeben ist und dem von einer Volute (10) ein Fluidstrom, insbesondere Abgas der Brennkraftmaschine zuführbar ist, der in einen eine Achse der Welle (4) umschließenden Haupt-Abströmkanal (12) ableitbar ist, wobei zwischen der Volute (10) und einem weiteren Abströmkanal (12') wenigstens ein Verbindungskanal (20) zu einem bezüglich einer axialen Richtung (AR) der Welle (4) radial umlaufenden Ringkanal (22) angeordnet ist, der über eine im Turbinengehäuse (14) angeordnete und bezüglich ihres Querschnitts variierbare Verstelleinrichtung (26) mit dem weiteren Abströmkanal (12') als Bypass verbunden ist, wobei die Verstelleinrichtung (26) über den Stellantrieb (24) der verstellbaren Schaufeln (8) regelbar ist.

## Beschreibung

Die Erfindung betrifft eine Turbinenanordnung mit variabler Geometrie, insbesondere in einer Aufladevorrichtung einer Brennkraftmaschine.

Aus dem allgemeinen Stand der Technik sind Aufladevorrichtungen bekannt, die als Abgasturbolader an einer Brennkraftmaschine vorgesehen sind. Derartige Vorrichtungen sind typischerweise zur Zuführung von Luft einer Motoransaugung ausgebildet. Dazu ist ein Turbinengehäuse vorgesehen, das an einem Auspuffkrümmer der Brennkraftmaschine angeordnet ist. Ein Kompressorgehäuse ist in einem Ansaugkrümmer der Brennkraftmaschine angeordnet, wobei ein Lagergehäuse mit dem Turbinengehäuse und dem Kompressorgehäuse verbunden ist. Im Lagergehäuse ist eine Welle drehbar gelagert, die ein Turbinenrad mit dem Kompressorrad verbindet. Um in einem Abgasturoblader eine variable Turbinengeometrie auszubilden, ist eine Schaufelanordnung vorgesehen, die schwenkbare Schaufeln im Turbinengehäuse umfasst, um den Durchgang für den Abgasstrom zu variieren. Das Schwenken der Schaufeln wird üblicherweise mittels eines Aktuators bewirkt, der eine Verbindung zu jeder Schaufel aufweist und so ausgebildet ist, dass die Winkelausrichtung aller Schaufeln gemeinsam gesteuert werden kann. Die Zuführung des Abgases zum Turbinengehäuse wird üblicherweise spiralförmig ausgebildet, wobei der Zuführkanal auch als Volute bezeichnet wird.

Aus der US 5,146,752 A ist ein Abgasturbolader an einer Brennkraftmaschine mit einer einen Verdichter antreibenden Turbine, die einen Verstellmechanismus mit verstellbaren Leitschaufeln zur Beeinflussung der Strömungsverhältnisse in der Turbine aufweist, bekannt, wobei der Verstellmechanismus und eine Abblaseeinrichtung, die einen Teil der Abgase an der Turbine vorbeileitet, von einem einzigen, gemeinsamen Stellglied betätigbar sind.

Aus der US 8,047,772 B2 ist eine Turbine mit variabler Geometrie bekannt, die ein Schiebeelement zur Steuerung des Durchlassabschnitts der Turbine aufweist, in dem das Schiebeelement entlang einer axialen Richtung eines Turbinenrades verschiebbar ist. Das Turbinenrad wandelt einen Arbeitsfluidstrom in mechanische Energie um. In dem Schiebeelement ist wenigstens ein Bypasskanal definiert, der mit einem Auslassbereich des Turbinenrads stromabwärts des Turbinenrads verbunden ist, um einen überschüssigen Teil des Arbeitsfluidstroms selektiv an dem Turbinenrad vorbeizuführen, um den Betrieb der Turbine zu steuern.

Aus der US 8,573,929 B2 ist ein Turbolader mit einem ringförmigen Bypasskanal bekannt, der einem Abgasstrom das Umgehen eines Turbinenrades ermöglicht. Im Bypasskanal ist ein ringförmiges Bypassventil angeordnet. Das Bypassventil umfasst einen festen ringförmigen Ventilsitz und ein rotierendes ringförmiges Ventilelement, das koaxial zum Ventilsitz angeordnet ist. Das Ventilelement ist gegen den Ventilsitz angeordnet und um eine Achse drehbar, um selektiv einen Ausrichtgrad zwischen jeweiligen Öffnungen im Ventilsitz und im Ventilelement zu variieren. Die Turbine umfasst eine Schaufelanordnung, wobei die Schaufelanordnung sowohl feste als auch variable Schaufeln umfassen kann.

Derartige Ladedruckregelungen mittels eines turbinenseitigen Bypasses (häufig auch dem englischen Sprachgebrauch folgend als Wastegate bezeichnet) benötigen ein entsprechendes Stellglied, um die gewünschte Funktion in Abhängigkeit der Motordrehzahl ausüben zu können. Somit benötigen moderne Motoren mit Aufladevorrichtungen in der Regel zwei Aktuatoren, die zur Verstellung der Schaufelpositionen der variablen Turbinengeometrie und des Wastegates bereitgestellt werden müssen.

Die Erfinder haben sich nun die Aufgabe gestellt, eine vereinfachte Möglichkeit zur Bypassregelung in einer Turbinenanordnung mit variabler Geometrie zu schaffen.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine Turbinenanordnung mit variabler Geometrie, insbesondere in einer Aufladevorrichtung einer Brennkraftmaschine geschaffen, die innerhalb eines Turbinengehäuses ein auf einer Welle angeordnetes Turbinenrad aufweist, das radial von einer Vielzahl über einen Stellantrieb bezüglich ihres Winkels verstellbaren Schaufeln zur Erzeugung der variablen Geometrie umgeben ist und dem von einer Volute ein Fluidstrom, insbesondere Abgas der Brennkraftmaschine zuführbar ist, der in einen eine Achse der Welle umschließenden Abströmkanal ableitbar ist, wobei zwischen der Volute und dem Abströmkanal wenigstens ein Verbindungskanal zu einem bezüglich einer axialen Richtung der Welle radial umlaufenden Ringkanal angeordnet ist, der über eine Öffnung im Turbinengehäuse, die über eine Verstelleinrichtung bezüglich ihres Querschnitts variierbar ist, mit dem Abströmkanal als Bypass verbunden ist, wobei die Verstelleinrichtung über den Stellantrieb der verstellbaren Schaufeln regelbar ist.

Demnach wird in der Turbinenanordnung entlang einer axialen Richtung ein zum Haupt-Abströmkanal weiterer Abströmkanal als Bypass gebildet, der mittels im Querschnitt variierbarer Öffnungen eine Verbindung zwischen der Volute und dem Abströmkanal über einen radial umlaufenden Ringkanal schafft. Die Variation des Querschnitts wird mittels einer Verstelleinrichtung bewirkt, die über den Stellantrieb der verstellbaren Schaufeln zur Erzeugung der variablen Geometrie geregelt wird. Folglich ist es möglich, mittels einer einzigen Regelanordnung beziehungsweise mittels eines einzigen Aktuators sowohl die variable Geometrie der verstellbaren Schaufeln als auch die Variation des Querschnitts des Verbindungskanals zu schaffen. Diese Vorgehensweise ermöglicht einen kompakten und zugleich kostengünstigen Aufbau, bei dem eine Funktion eines Bypasses (Wastegate) regelbar ist.

Gemäß einer Ausführungsform der Erfindung sind der Stellantrieb und die Verstelleinrichtung so ausgebildet, dass ab einem vorgegebenen Startwert des Winkels der Schaufeln ein Öffnen und/oder Schließen des Querschnitts der Verstelleinrichtung erfolgt.

Typischerweise erfolgt das Verstellen des Winkels der Schaufeln in Abhängigkeit der Drehzahl der Brennkraftmaschine, um die gewünschte variable Turbinengeometrie zu erzeugen. Das Öffnen und/oder Schließen des Querschnitts der Öffnung wird jedoch in den meisten Anwendungsfällen bei einer Drehzahl der Brennkraftmaschine beginnen, die unabhängig vom Verstellen des Winkels der Schaufeln bei einem vorgegebenen Startwert vorgenommen werden soll. Demnach ist es möglich, trotz der Verwendung lediglich eines Stellantriebs die variable Turbinengeometrie und die Bypassfunktion bei unterschiedlichen Drehzahlen einsetzen zu lassen.

Gemäß einer weiteren Ausführungsform der Erfindung ist der variable Querschnitt der Verstelleinrichtung in Abhängigkeit einer Drehzahl mit einer Kennlinie änderbar, die unabhängig von einer weiteren Kennlinie des Änderns des Winkels der Schaufeln festlegbar ist.

Gemäß dieser Ausführungsform ist es vorgesehen, die Regelung der variablen Turbinengeometrie und die Bypassfunktion mit zwei unterschiedlichen Kennlinien auszugestalten, die jeweils in Abhängigkeit der Drehzahl der Brennkraftmaschine entsprechend vorgegeben werden können. Diese Vorgehensweise erlaubt eine große Flexibilität bei der Regelung sowohl der variablen Turbinengeometrie über die verstellbaren Schaufeln als auch der Bypassfunktion über die variierbare Öffnung.

Gemäß einer weiteren Ausführungsform der Erfindung sind zwischen der Volute und dem weiteren Abströmkanal weitere Verbindungskanäle ausgebildet, die umfangsseitig an unterschiedlichen Positionen in den Ringkanal münden.

Demnach wird ein Bypass zwischen der Volute und dem weiteren Abströmkanal an unterschiedlichen Positionen gebildet, wobei der Fluidstrom über die Verbindungskanäle in den Ringkanal mündet. Ausgehend von dem Ringkanal wird der Fluidstrom dann über den variablen Querschnitt der Verstelleinrichtung in den Haupt-Abströmkanal geleitet. Auf diese Weise ist es möglich, das Strömungsverhalten des Haupt-Abströmkanals dem eines idealen Diffusors anzunähern, sodass eine verbesserte Effizienz der Aufladevorrichtung erzeugt werden kann.

Gemäß einer weiteren Ausführungsform der Erfindung ist der weitere Abströmkanal bzw. der Haupt-Abströmkanal ohne Stoßdiffusor ausgeführt.

Bisher bekannte Aufladevorrichtungen mit einem Bypass an der Turbine werden üblicherweise mit einem Stoßdiffusor gebildet, der das Strömungsverhalten entsprechend beeinflussen soll. Gemäß der Erfindung ist dies nicht mehr erforderlich, was insbesondere am verbesserten Strömungsverhalten der erfindungsgemäßen Turbinenanordnung liegt. Somit ist eine Verbesserung der Effizienz der Turbinenanordnung möglich, wobei darüber hinaus auch kompaktere Ausgestaltungen der Turbinenanordnung erreicht werden können.

Gemäß einer weiteren Ausführungsform der Erfindung ist die Verstelleinrichtung in Form einer Blendenanordnung ausgeführt, die kreissegmentförmig den Querschnitt im Turbinengehäuse überdeckt.

Der Querschnitt im Turbinengehäuse wird demnach von einer als Ringblende ausgebildeten Blendenanordnung überdeckt. Die Fläche des Querschnitts im Turbinengehäuse weist daher die Form eines Kreisrings auf bzw. wird durch mehrere Kreissegmente gebildet, die den Querschnitt vollständig überdecken.

Gemäß einer weiteren Ausführungsform der Erfindung weist die Blendenanordnung mehrere Blendensegmente auf, deren Position zueinander mittels des Stellantriebs der verstellbaren Schaufeln ansteuerbar ist.

In dem die Blendenanordnung mehrere Blendensegmente aufweist, kann diese ähnlich einer Ringblende, wie sie zum Beispiel in der Optik Verwendung findet, ausgestaltet werden, sodass ein variabler Querschnitt im Turbinengehäuse in Form eines Bypasses vorliegt.

Gemäß einer weiteren Ausführungsform der Erfindung ist die Verstelleinrichtung in Form zweier kreissegmentförmiger Schlitzscheiben mit sich überdeckenden Schlitzen ausgeführt.

Hier handelt es sich um eine alternative Ausgestaltung der Verstelleinrichtung, die anstelle der Ringblende eingesetzt werden kann. Zwei kreissegmentartige Scheiben werden dabei jeweils mit Schlitzen ausgeführt, sodass durch eine Drehung der beiden Scheiben zueinander die Schlitze in Deckung gebracht werden können, um den Fluidstrom durch die Verstelleinrichtung hindurch zu leiten. Somit ist eine im Wesentlichen stufenlose Regelung möglich, die über den Stellantrieb erfolgen kann.

Gemäß einer weiteren Ausführungsform der Erfindung ist eine der beiden Scheiben eine Anlaufscheibe der verstellbaren Schaufeln.

Demnach ist es möglich, auf einfache Weise das Verstellen der Schaufeln und die Variation des Querschnitts der Öffnung im Turbinengehäuse mechanisch zu koppeln. Die Anlaufscheibe ist demnach sowohl Bestandteil der variablen Turbinengeometrie als auch des Bypasses. Auf diese Weise lässt sich die Zahl der Bauteile reduzieren, was beispielsweise einen kompakteren Aufbau der Turbinenanordnung zur Folge hat.

Gemäß einer weiteren Ausführungsform der Erfindung erfolgt die Verdrehung der beiden Scheiben mittels eines Mitnahmestifts, der mit dem Stellantrieb der verstellbaren Schaufeln gekoppelt ist.

Die Verdrehung der beiden Scheiben kann auch mittels eines Mitnahmestiftes erfolgen, wobei der Mitnahmestift in einer Kulisse geführt ist, deren Form die Kennlinie bei der Variation des Querschnitts der Öffnung beeinflussen kann.

Somit ist es möglich, die Variation des Querschnitts der Öffnung vom Verstellen der Schaufeln in gewissen Grenzen zu entkoppeln.

Gemäß einer weiteren Ausführungsform der Erfindung ist die Verstelleinrichtung in Form einer kreissegmentförmigen Abdeckscheibe ausgeführt, die mehrere erhabene Elemente aufweist, die die Öffnung im Turbinengehäuse zu dem Abströmkanal überdecken.

Diese Ausführungsform stellt eine dritte Variante bereit, die den Querschnitt der Öffnung der Verstelleinrichtung beeinflussen kann. Hier wird eine Abdeckscheibe verwendet, die beispielsweise entlang der axialen Richtung verschoben werden kann, sodass die erhabenen Elemente die Öffnung im Turbinengehäuse schließen bzw. freigeben können. Vorteilhafterweise wird die Abdeckscheibe durch einen oder mehrere zusätzliche Führungsstifte entlang der axialen Richtung geführt, wobei ein entsprechender Rücksetzmechanismus vorgesehen sein kann, um die Abdeckscheibe beim Starten der Brennkraftmaschine in eine definierte Position zu bringen.

Gemäß einer weiteren Ausführungsform der Erfindung ist die Verbindung zu dem weiteren Abströmkanal als Gehäuseeinsatz im Turbinengehäuse ausgeführt.

Während die ersten beiden Varianten typischerweise in einem einstückigen Turbinengehäuse eingesetzt werden, ist der Aufbau mit der Abdeckscheibe vorteilhafter Weise als Gehäuseeinsatz zu realisieren, der in das Turbinengehäuse als separates Bauteil eingebracht wird.

Des Weiteren wird eine Aufladevorrichtung für eine Brennkraftmaschine angegeben, die in einem Lagergehäuse auf einem Schaft ein Verdichterrad aufweist, wobei der Schaft mit dem von einem Abgasstrom antreibbarem Turbinenrad einer Turbinenanordnung wie oben beschrieben verbunden ist.

Nachfolgend werden einige Ausführungsbeispiele der Erfindung anhand der Zeichnung näher erläutert. Es zeigen:
- Fig.1: eine Querschnittsansicht eines Teils der erfindungsgemäßen Turbinenanordnung gemäß einer ersten Ausführungsform der Erfindung,
- Fig.2: ein Detail der Turbinenanordnung nach Figur 1 in einer Draufsicht,
- Fig. 3: eine perspektivische Seitenansicht eines Teils der erfindungsgemäßen Turbinenanordnung gemäß einer zweiten Ausführungsform der Erfindung,
- Fig. 4: ein Detail der Turbinenanordnung nach Figur 3 in einer Draufsicht,
- Fig. 5: ein weiteres Detail der Turbinenanordnung nach Figur 3 in einer Draufsicht,
- Fig. 6: ein weiteres Detail der Turbinenanordnung nach Figur 3 in einer Draufsicht,
- Fig. 7: ein weiteres Detail der Turbinenanordnung nach Figur 3 in einer Schnittansicht,
- Fig. 8: ein weiteres Detail der Turbinenanordnung nach Figur 3 in einer Schnittansicht,
- Fig. 9: eine perspektivische Seitenansicht eines Teils der erfindungsgemäßen Turbinenanordnung gemäß einer dritten Ausführungsform der Erfindung,
- Fig.10: ein Detail der Figur 9, und
- Fig.11: ein Abgasturbolader in einer Schnittansicht mit einer erfindungsgemäßen Turbinenanordnung nach der ersten Ausführungsform.

In den Figuren sind gleiche oder funktional gleich wirkende Bauteile mit den gleichen Bezugszeichen versehen.

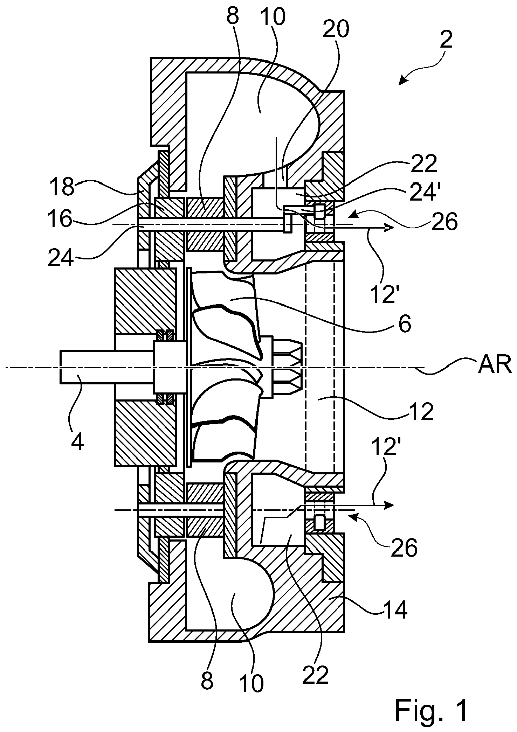

In Figur 1 ist eine erste Ausführungsform der Erfindung gezeigt. Die Turbinenanordnung 2 ist dabei in einer Querschnittsansicht gezeigt, wobei aus Gründen der besseren Übersichtlichkeit weitere Bestandteile weggelassen wurden, um nur die für die Erfindung relevanten Bauteile darstellen zu können. Auf einer Welle 4 ist an einem axialen Ende ein Turbinenrad 6 angeordnet. Umfangseitig wird das Turbinenrad 6 von einer Vielzahl von verstellbaren Schaufeln 8 umgeben, die auf fachübliche Weise eine variable Turbinengeometrie bereitstellen. Die Achse des Welle 4 definiert eine axiale Richtung AR.

Die verstellbaren Schaufeln 8 können dabei entlang des Außenumfangs des Turbinenrads 6 einen Fluidstrom beeinflussen, der zwischen einer Volute 10 und einem Haupt-Abströmkanal 12 das Turbinenrad 6 durchströmen kann. Die Volute 10 bildet einen Teil eines Turbinengehäuses 14, in das die weiteren Elemente zum Bilden der variablen Turbinengeometrie eingesetzt werden. Dazu werden die verstellbaren Schaufeln 8 auf einem Trägerring 16 drehbar gelagert, wobei die Drehbewegung mittels eines Verstellrings 18 gesteuert werden kann. Der Verstellring 18 ist mit einem Stellantrieb 24 gekoppelt, der in Figur 1 lediglich schematisch als Stift dargestellt ist und die verstellbaren Schaufeln entsprechend bewegt, üblicherweise durch eine Drehbewegung des Verstellrings 18 um die axiale Richtung AR. Somit ändert sich der Querschnitt für den Fluidstrom zwischen der Volute 10 und dem Haupt-Abströmkanal 12.

Um eine Bypassfunktion zu schaffen, ist nun ein Verbindungskanal 20 vorgesehen, der die Volute 10 mit einem Ringkanal 22 verbindet. Der Ringkanal 22 ist dabei bezüglich der axialen Richtung AR der Welle 4 radial umlaufenden angeordnet, wobei (nicht in Figur 1 gezeigt) auch mehrere Verbindungskanäle 20 vorgesehen sein können, um die Volute 10 mit dem Ringkanal 22 an mehreren Stellen zu verbinden. Der Ringkanal 22 grenzt an einen weiteren Abströmkanal 12', der von einer Verstelleinrichtung 26 bezüglich seines Querschnitts variiert werden kann. Die Verstelleinrichtung 26 öffnet oder schließt somit einen Bypasskanal von der Volute 10 zum weiteren Abströmkanal 12', der auch als Bypasskanal bezeichnet werden könnte. Der weitere Abströmkanal 12' mündet in den Haupt-Abströmkanal 12. Die Verstelleinrichtung 26 ist ebenfalls über den Stellantrieb 24 der verstellbaren Schaufeln 8 regelbar, was gemäß Figur 1 durch die Weiterführung der Betätigung des Stifts an einen Mitnahmestift 24' zur Betätigung der Verstelleinrichtung 26 schematisch dargestellt ist.

In der Ausführungsform gemäß Figur 1 überdeckt die Verstelleinrichtung 26 einen kreisringförmigen Bereich, der sich in radialer Richtung senkrecht zur axialen Richtung der Welle 4 erstreckt. Somit kann ein Fluidstrom von der Volute 10 über den Ringkanal 22 den Kreis ringförmigen Bereich der Öffnung der Verstelleinrichtung 26 in Richtung des weiteren Abströmkanals 12' verlassen, um die Bypassfunktion zum Haupt-Abströmkanal 12 ausüben zu können.

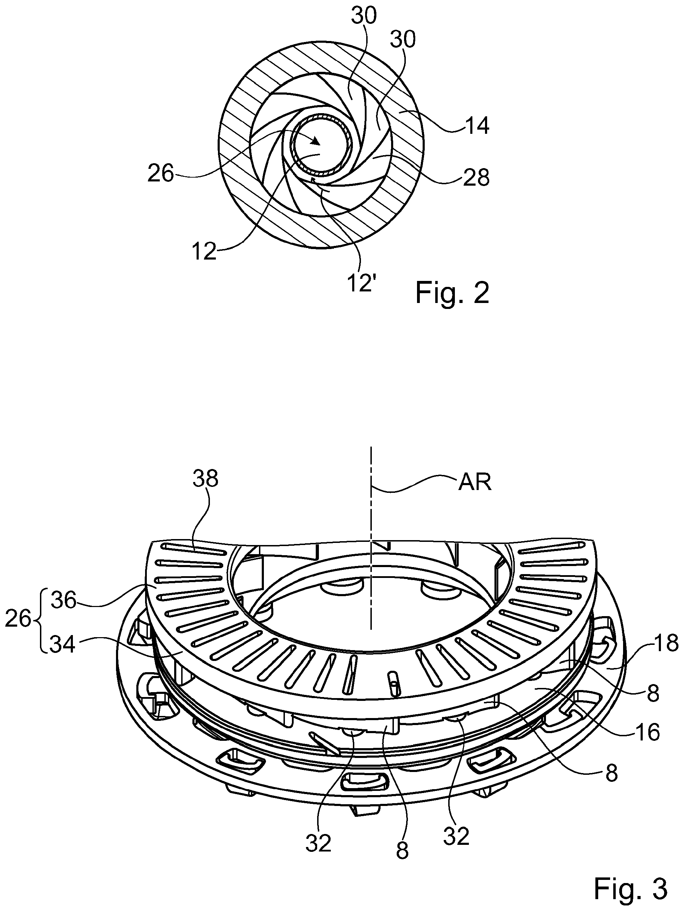

Unter Bezugnahme auf Figur 2 ist die Verstelleinrichtung 26 nochmals detailliert dargestellt. Man erkennt, dass die Öffnung der Verstelleinrichtung 26 in Form eines Kreisrings von einer Blendenanordnung 28 überdeckt wird. Die Blendenanordnung 28 schafft somit einen variablen Querschnitt der Verstelleinrichtung 26 im Turbinengehäuse 14 zum weiteren Abströmkanal 12', der über den Stellantrieb 24 der verstellbaren Schaufeln 8 regelbar ist. Der variable Querschnitt der Blendenanordnung 28 im Turbinengehäuse 14 ist in Figur 2 radial von außen nach innen verschließbar, eine andere Ausführung mit segmentweisem Verschließen ist aber nicht ausgeschlossen. Wie in Figur 2 gezeigt ist, umfasst die Blendenanordnung 28 mehrere Einzelblenden 30, die sich zu einem verstellbaren Kreisring ergänzen. Darüber hinaus könnte die in Form der Blendenanordnung 28 ausgestaltete Verstelleinrichtung 26 auch in mehrere Kreissegmente aufgeteilt sein, die ihrerseits individuell zum Öffnen und Schließen betätigbar sind.

Die koaxiale Anordnung des weiteren Abströmkanals 12' in Bezug zum Haupt-Abströmkanal 12 kommt einem idealen Diffusor sehr nahe, sodass der Haupt-Abströmkanal 12 ohne Stoßdiffusor ausgeführt sein kann, wie dies ansonsten im Stand der Technik üblich ist. Auf diese Weise kann die Effizienz der Turbinenanordnung 2 gesteigert werden, wobei zusätzliche Vorteile auch durch den kompakteren Aufbau der Turbinenanordnung 2 sowie die Verwendung des Stellantriebs 24 zur gemeinsamen Regelung mit der Verstelleinrichtung 26 erreicht werden können.

Unter Bezugnahme auf Figur 3 wird nachfolgend eine weitere Ausführungsform der Erfindung gezeigt, wobei in Figur 3 lediglich die Verstelleinrichtung 26 sowie die verstellbaren Schaufeln 8 nebst ihrem Verstellmechanismus in einer schematischen Seitenansicht gezeigt sind. Die übrigen am turbinenseitigen Ende eines Abgasturboladers vorgesehenen Bauteile gemäß Figur 1 sind in dieser Ausführungsform selbstverständlich ebenfalls vorgesehen.

Die verstellbaren Schaufeln 8 sind über Drehachsen 32 auf dem Trägerring 16 drehbar angeordnet. Um die Drehachsen 32 können die verstellbaren Schaufeln 8 jeweils mittels eines Mitnahmestiftes (nicht in Figur 3 gezeigt) über den Verstellring 18 entsprechend bewegt werden. Oberhalb der verstellbaren Schaufeln 8 sind zwei ringförmige Schlitzscheiben angeordnet, wobei die erste Schlitzscheibe 34 auf der den verstellbaren Schaufeln 8 zugewandten Seite angeordnet ist und um die vom Turbinenrad 6 definierte axiale Richtung AR drehbar ist. Die zweite Schlitzscheibe 36 kann auch Teil des Turbinengehäuses 14 sein. Die erste Schlitzscheibe 34 und die zweite Schlitzscheibe 36 bilden zusammen die Verstelleinrichtung 26.

Durch Drehen der ersten Schlitzscheibe 34 können nun die in gleichem Muster ausgebildeten Schlitze der ersten Schlitzscheibe 34 und die Schlitze 38 der zweiten Schlitzscheibe 36 bezüglich ihres Durchtrittquerschnitts für einen Fluidstrom variiert werden. Die Drehung der ersten Schlitzscheibe 34 kann dabei über einen Mitnahmestift erfolgen, der in Figur 3 wiederum mit dem Bezugszeichen 24' angedeutet ist. Die in Figur 3 gezeigten Schlitzscheiben 34, 36 können auch einen Teil der Anordnung der verstellbaren Schaufeln 8 sein und beispielsweise eine Anlaufscheibe bilden.

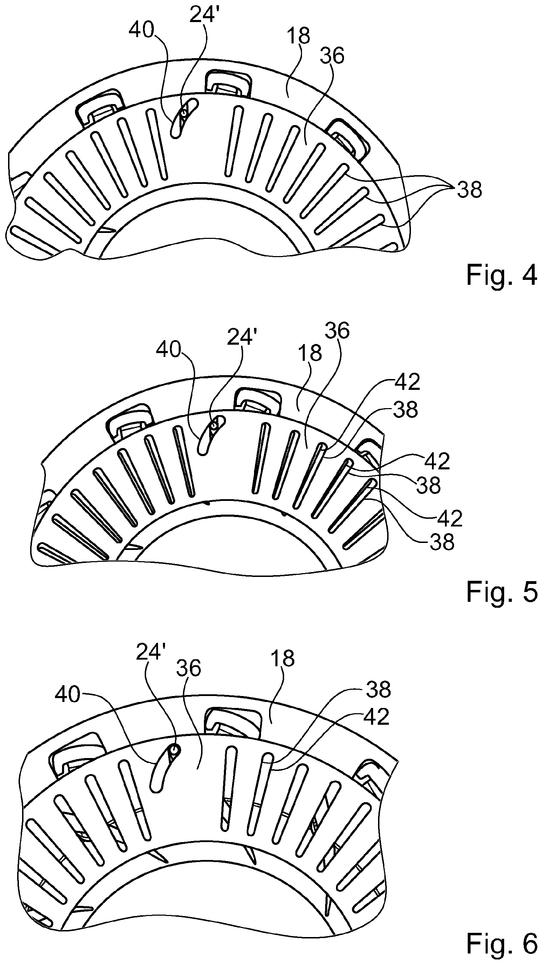

In Figur 4 ist das Ausrichten der Schlitzscheiben 34, 36 zueinander nochmals dargestellt. Man erkennt, dass der Mitnahmestift 24' in einer Art Kulisse 40 geführt wird, so dass die Bewegung des Stellantriebs 24 mit einer bezüglich der Drehzahl der Brennkraftmaschine veränderten Kennlinie in eine Bewegung der ersten Schlitzscheibe 34 gegenüber der zweiten Schlitzscheibe 36 umgesetzt werden kann. In Figur 4 ist in der Draufsicht eine Anordnung der ersten Schlitzscheibe 34 und der zweiten Schlitzscheibe 36 zueinander gezeigt, bei der die Schlitze der beiden Schlitzscheiben 34, 36 nicht überlappen und Durchtrittquerschnitt vollständig geschlossen ist, so dass kein Fluidstrom durch die Verstelleinrichtung 26 treten kann.

In Figur 5 ist eine veränderte Anordnung der beiden der Schlitzscheiben 34, 36 zueinander gezeigt, wobei hier die Schlitze 42 der ersten Schlitzscheiben 34 und die Schlitze 38 der zweiten Schlitzscheiben 36 sich teilweise überlappen, so dass ein Fluidstrom durch die Verstelleinrichtung 26 treten kann.

In Figur 6 ist eine vollständig geöffnete Konfiguration der Verstelleinrichtung 26 gezeigt, so dass nun die Verstelleinrichtung 26 ihren größten Querschnitt erreicht hat.

Anhand der Darstellungen der Figur 4 bis 6 wird auch deutlich, wie der Mitnahmestift 24' durch die Kulisse 40 geführt wird, so dass die erste Schlitzscheibe 34 und die zweite Schlitzscheibe 36 um die axiale Richtung AR gedreht unterschiedliche Positionen zueinander einnehmen können. Die Form der Kulisse 40 sowie die Anbindung des Mitnahmestifts 24' an den Stellantrieb 24 ermöglicht es, das Öffnen und Schließen der Verstelleinrichtung 26 drehzahlabhängig und insbesondere auch in gewissen Grenzen unabhängig vom Einsatzverhalten der variablen Schaufeln 8 zu gestalten.

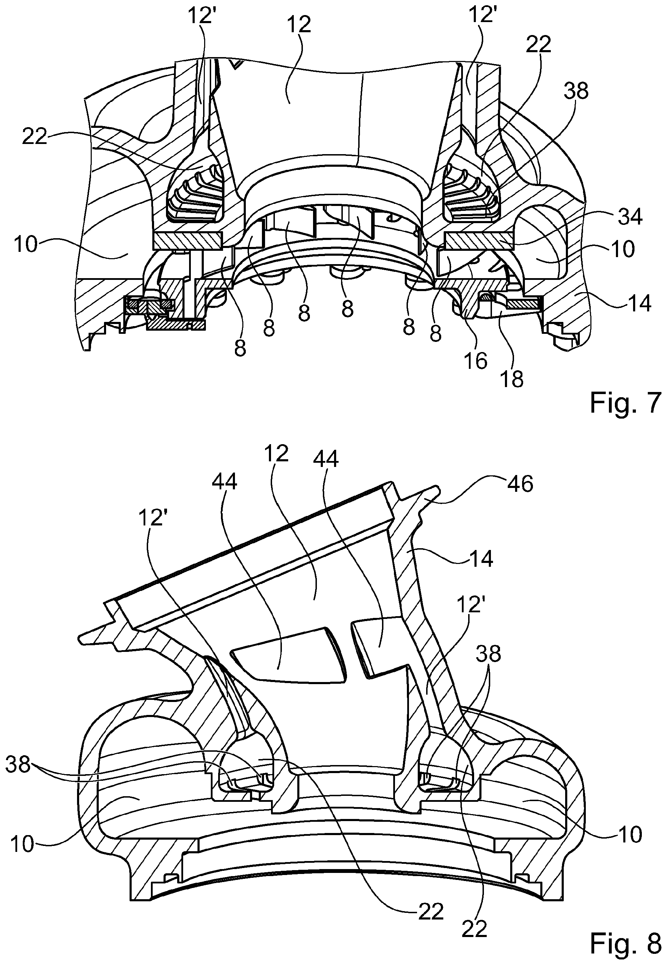

In Figur 7 ist die Verstelleinrichtung 26 gemäß den Figuren 3 bis 6 in einer teilweise geschnittenen Darstellung gezeigt, in der die Verstelleinrichtung 26 in das Turbinengehäuse 14 eingesetzt ist. Man erkennt, dass die zweite Schlitzscheibe 36 mit ihren Schlitzen 38 in den Ringkanal 22 münden, so dass durch den variablen Querschnitt der Verstelleinrichtung 26 ein Fluidstrom in den weiteren Abströmkanal 12' gelangen kann, der den Haupt-Abströmkanal 12 koaxial umgibt.

Unter Bezugnahme auf Figur 8 ist eine Ausführungsform des Turbinengehäuses 14 gezeigt, bei dem die Verstelleinrichtung 26 gemäß dem zweiten Ausführungsbeispiel nach den Figuren 3 bis 7 ausgeführt wurde, das heißt insbesondere die zweite Schlitzscheibe 36 mit den Schlitzen 38 aufweist, die einen Bestandteil des Turbinengehäuses 14 bildet. Man erkennt, dass der Ringkanal 22 in den weiteren Abströmkanal 12' mündet, wobei über mehrere Durchtrittsöffnungen 44 der Fluidstrom mit dem Haupt-Abströmkanal 12 zusammentrifft. Das Turbinengehäuse 14 ist in Richtung eines Anschlussflansches 46 mit einer leicht gekrümmten Form ausgeführt, ist gemäß der koaxialen Ausgestaltung des weiteren Abströmkanals 12' und des Haupt-Abströmkanals 12 jedoch ohne Stoßdiffusor ausgeführt und weist insgesamt einen kompakten Aufbau auf.

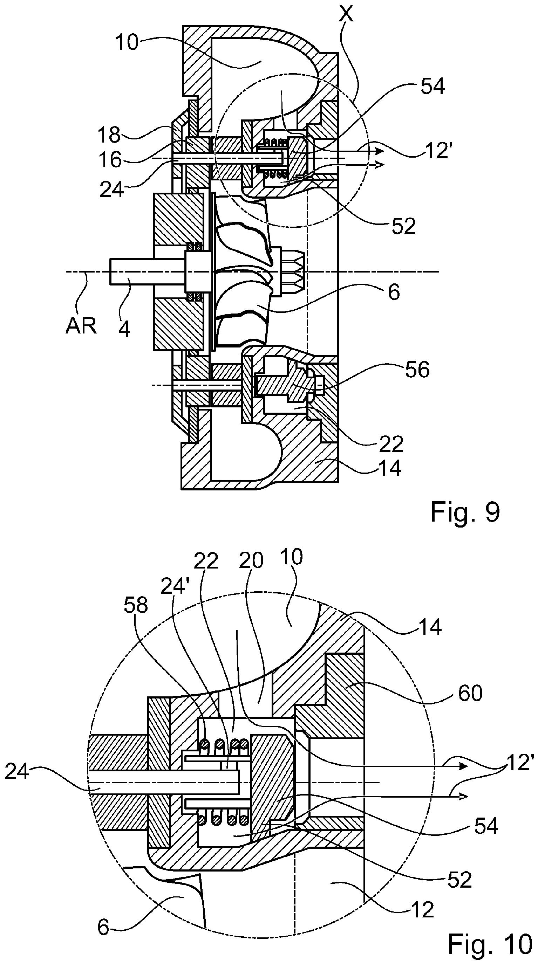

Unter Bezugnahme auf Figur 9 und der daraus resultierenden teilweisen Vergrößerung gemäß Figur 10 wird nachfolgend eine dritte Ausführungsform der Erfindung beschrieben. Um Wiederholungen zu vermeiden, werden hier lediglich die im Vergleich zu den bisherigen Ausführungsformen geänderten Bauteile erläutert. Zu den übrigen Bauteilen wird auf die Erläuterungen bezüglich der Figuren 1 bis 8 verwiesen.

Die Verstelleinrichtung 26 ist gemäß der dritten Ausführungsform als kreissegmentförmige Abdeckscheibe 52 ausgeführt, die mehrere erhabene Elemente 54 aufweist, die die Öffnung der Verstelleinrichtung 26 im Turbinengehäuse 14 zu dem weiteren Abströmkanal 12' überdecken. Die Abdeckscheibe 52 weist dabei wenigstens einen Führungsstift 56 auf, der die Abdeckscheibe in der axialen Richtung führt. Entlang des kompletten Umfangs der Abdeckscheibe 52 werden üblicherweise mehrere der in Figur 9 dargestellten Führungsstifte 56 vorgesehen sein, um eine Verschiebung der Abdeckscheibe 52 entlang der axialen Richtung zu bewirken, wobei die Fläche der Abdeckscheibe 52 senkrecht zur axialen Richtung erhalten bleibt.

Schematisch ist wiederum in Figur 9 eingezeichnet, dass der Mitnahmestift 24' die Abdeckscheibe 52 entlang der axialen Richtung verschieben kann, so dass das erhabene Element 54 die Öffnung der Verstelleinrichtung 26 bezüglich ihres Querschnitts variieren kann, um den Bypasskanal von der Volute 10 über den Verbindungskanal 20 in den Ringkanal 22 entsprechend zu regeln, so dass ein Querschnitt der Verstelleinrichtung 26 variiert werden kann. Um beim Starten einer Brennkraftmaschine die Abdeckscheibe 52 in eine definierte Position zu bringen, das heißt vor erstmaliger Betätigung des Mitnahmestift 24', kann beispielsweise eine Feder 58 vorgesehen sein, die für eine definierte Startposition sorgt.

Wie insbesondere Figur 10 zu entnehmen ist, kann die Öffnung der Verstelleinrichtung 26 im Turbinengehäuse 14 in Form eines Gehäuseeinsatzes 60 gebildet sein, was insbesondere die Montage der Abdeckscheibe 52 beim Zusammensetzen eines Abgasturboladers deutlich vereinfacht.

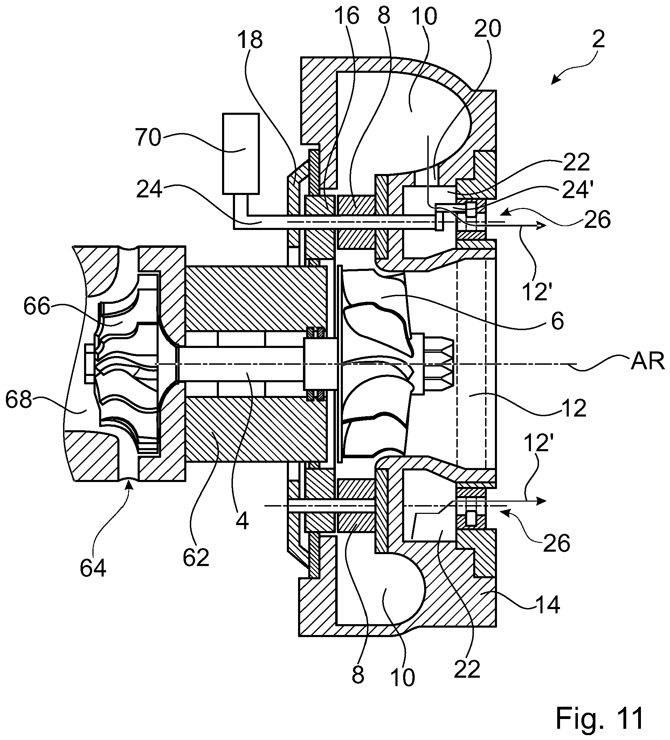

Die in den Figuren 1 bis 10 dargestellten Ausführungsformen der Erfindung behandelten jeweils nur die turbinenseitige Ausgestaltung eines Abgasturboladers. Wie unter Bezugnahme auf Fig. 11 dargestellt ist, weist ein Abgasturbolader weitere Bestandteile auf, bei denen die Welle 4 über ein Lagergehäuse 62 mit einem Kompressor 64 in Verbindung steht. Somit kann ein Fluidstrom über die Volute 10 durch das Turbinenrad 6 in Form von Abgas einer Brennkraftmaschine das Kompressorrad 66 in Bewegung setzen, um über einen Ansaugkanal 68 der Brennkraftmaschine verdichtete Luft zuführen zu können.

Die Verstellbarkeit der verstellbaren Schaufeln 8 wird somit über einen Aktuator 70 bewirkt, der über den im Zusammenhang mit der Stellantrieb 24 und dem Mitnahmestift 24' erläuterten Mechanismus auch die Verstelleinrichtung 26 bedient. Wie bereits erwähnt, kann dabei bezüglich der Veränderung der Verstelleinrichtung 26 eine Kennlinie gewählt werden, die beispielsweise ab einem vorgegebenen Startwert des Verstellwinkels der Schaufeln 8 ein Öffnen bzw. Schließen des Querschnitts der Verstelleinrichtung 26 bedingt. Die Verstellrate kann dabei unabhängig von der Kennlinie des Änderns des Winkels der Schaufeln 8 gewählt werden. Somit ist es möglich, die Verstelleinrichtung 26 und das Ändern der verstellbaren Schaufeln zum Erzeugen der variablen Geometrie mit unabhängigen Kennlinien durchzuführen.

Vorteilhafterweise kann die in Zusammenhang mit den Figuren 1 bis 11 beschriebene Turbinenanordnung 2 bei einem Otto-Motor aber auch bei einem Diesel-Motor eingesetzt werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Liste der Bezugszeichen:

- 2: Turbinenanordnung
- 4: Welle
- 6: Turbinenrad
- 8: Schaufeln
- 10: Volute
- 12: Haupt-Abströmkanal
- 12': weiterer Abströmkanal
- 14: Turbinengehäuse
- 16: Trägerring
- 18: Verstellring
- 20: Verbindungskanal
- 22: Ringkanal
- 24: Stellantrieb
- 24': Mitnahmestift
- 26: Verstelleinrichtung
- 28: Blendenanordnung
- 30: Einzelblenden
- 32: Drehachse
- 34: erste Schlitzscheibe
- 36: zweite Schlitzscheibe
- 38: zweite Schlitze
- 40: Kulisse
- 42: erste Schlitze
- 44: Durchtrittsöffnungen
- 46: Anschlussflansch
- 52: Abdeckscheibe
- 54: erhabenes Element
- 56: Führungsstift
- 58: Feder
- 60: Gehäuseeinsatz
- 62: Lagergehäuse
- 64: Kompressor
- 66: Kompressorrad
- 68: Ansaugkanal
- 70: Aktuator

## Patentansprüche

1. Turbinenanordnung (2) mit variabler Geometrie, insbesondere in einer Aufladevorrichtung einer Brennkraftmaschine, die innerhalb eines Turbinengehäuses (14) ein auf einer Welle (4) angeordnetes Turbinenrad (6) aufweist, das radial von einer Vielzahl über einen Stellantrieb (24) bezüglich ihres Winkels verstellbaren Schaufeln (8) zur Erzeugung der variablen Geometrie umgeben ist und dem von einer Volute (10) ein Fluidstrom, insbesondere Abgas der Brennkraftmaschine zuführbar ist, der in einen eine Achse der Welle (4) umschließenden Haupt-Abströmkanal (12) ableitbar ist, wobei zwischen der Volute (10) und einem weiteren Abströmkanal (12') wenigstens ein Verbindungskanal (20) zu einem bezüglich einer axialen Richtung (AR) der Welle (4) radial umlaufenden Ringkanal (22) angeordnet ist, der über eine im Turbinengehäuse (14) angeordnete und bezüglich ihres Querschnitts variierbare Verstelleinrichtung (26) mit dem weiteren Abströmkanal (12') als Bypass verbunden ist, wobei die Verstelleinrichtung (26) über den Stellantrieb (24) der verstellbaren Schaufeln (8) regelbar ist.

2. Turbinenanordnung nach Anspruch 1, bei der Stellantrieb (24) und die Verstelleinrichtung (26) so geregelt sind, dass ab einem vorgegebenen Startwert des Winkels der Schaufeln (8) ein Öffnen und/oder Schließen des Querschnitts der Verstelleinrichtung (26) erfolgt.

3. Turbinenanordnung nach Anspruch 1 oder 2, bei der der Querschnitt der Verstelleinrichtung (26) in Abhängigkeit einer Drehzahl mit einer Kennlinie änderbar ist, die unabhängig von einer weiteren Kennlinie des Änderns des Winkels der Schaufeln (8) festlegbar ist.

4. Turbinenanordnung nach einem der Ansprüche 1 bis 3, bei der zwischen der Volute (10) und dem weiteren Abströmkanal (12') weitere Verbindungskanäle (20) ausgebildet sind, die umfangsseitig an unterschiedlichen Positionen in den Ringkanal (22) münden.

5. Turbinenanordnung nach einem der Ansprüche 1 bis 4, bei der der Haupt-Abströmkanal (12) ohne Stoßdiffusor ausgeführt ist.

6. Turbinenanordnung nach einem der Ansprüche 1 bis 5, bei der die Verstelleinrichtung (26) in Form einer Blendenanordnung (28) ausgeführt ist, die kreissegmentförmig den Querschnitt im Turbinengehäuse (14) überdeckt.

7. Turbinenanordnung nach Anspruch 6, bei der die Blendenanordnung (28) mehrere Blendensegmente aufweist, deren Position zueinander mittels des Stellantriebs (24) der verstellbaren Schaufeln (8) ansteuerbar ist.

8. Turbinenanordnung nach einem der Ansprüche 1 bis 5, bei der die Verstelleinrichtung (26) in Form zweier kreissegmentförmiger Schlitzscheiben (34, 36) mit sich überdeckenden Schlitzen (38, 42) ausgeführt ist.

9. Turbinenanordnung nach Anspruch 8, bei der eine der beiden Schlitzscheiben (34, 36) eine Anlaufscheibe der verstellbaren Schaufeln (8) ist.

10. Turbinenanordnung nach Anspruch 8 oder 9, bei der die Verdrehung der beiden Schlitzscheiben (34, 36) mittels eines Mitnahmestifts (24') erfolgt, der mit dem Stellantrieb (24) der verstellbaren Schaufeln (8) gekoppelt ist.

11. Turbinenanordnung nach einem der Ansprüche 1 bis 5, bei der die Verstelleinrichtung (26) in Form einer kreissegmentförmigen Abdeckscheibe (52) ausgeführt ist, die mehrere erhabene Elemente (54) aufweist, die die Öffnung im Turbinengehäuse (14) zu dem weiteren Abströmkanal (12') überdecken.

12. Turbinenanordnung nach Anspruch 11, bei der die Verbindung zu dem weiteren Abströmkanal (12') als Gehäuseeinsatz (60) im Turbinengehäuse (14) ausgeführt ist.

13. Turbinenanordnung nach Anspruch 11 oder 12, bei der die kreissegmentförmige Abdeckscheibe (52) mit einem oder mehreren Führungsstiften (56) ausgeführt ist, die die Abdeckscheibe (52) in der axialen Richtung (AR) führen.

14. Turbinenanordnung nach einem der Ansprüche 11 bis 13, bei der die Abdeckscheibe (52) in der axialen Richtung (AR) durch den Stellantrieb (24) bewegbar ist

15. Aufladevorrichtung für eine Brennkraftmaschine, die in einem Lagergehäuse auf einer Welle (4) ein Turbinenrad (6) aufweist, wobei die Welle (4) mit dem von einem Abgasstrom antreibbarem Turbinenrad (6) einer Turbinenanordnung nach Anspruch 1 bis 14 verbunden ist.
